# EUROPÄISCHE PATENTSCHRIFT

(11) **EP 1 634 637 B1**
(45) Veröffentlichungstag und Bekanntmachung des Hinweises auf die Patenterteilung: **11.01.2012**
(21) Anmeldenummer: 05106876.5
(22) Anmeldetag: 26.07.2005
(51) Int. Cl.: B01D 53/90, B01D 53/94, F01N 3/20

(54) **Verfahren zum Einbringen eines Reagenzmittels in einen Abgasbereich einer Brennkraftmaschine und Vorrichtung zur Durchführung des Verfahrens**
Process and device for adding a reagent in the exhaust gas of a combustion engine
Procédé et dispositif pour l'introduction d'un réactif dans le gaz d'échappement d'un moteur à combustion

(30) Priorität: 08.09.2004 DE 102004043366
(43) Veröffentlichungstag der Anmeldung: 15.03.2006
(73) Patentinhaber: ROBERT BOSCH GMBH, 70442 Stuttgart (DE)
(72) Erfinder: Gerlach, Michael, 71336 Waiblingen-Neustadt (DE); Offenhuber, Michael, 5421 Adnet (AT); Czasch, Martin, 71364 Winnenden (DE); Lemarchand, Laurence, 70372 Stuttgart (DE); Lackner, Franz, 5542 Flachau (AT)

(56) Entgegenhaltungen:
- EP-A- 1 331 373
- WO-A-2005/099874
- WO-A-2005/108753
- DE-A1- 10 127 834
- DE-A1- 19 947 198
- PATENT ABSTRACTS OF JAPAN Bd. 2003, Nr. 12, 5. Dezember 2003 (2003-12-05) -& JP 2003 269145 A (MITSUBISHI FUSO TRUCK & BUS CORP), 25. September 2003 (2003-09-25) -& DATABASE WPI Section Ch, Week 200401 Derwent Publications Ltd., London, GB; Class E36, AN 2004-002429 XP002356988 & JP 2003 269145 A (MITSUBISHI FUSOU TRUCK BUS KK) 25. September 2003 (2003-09-25)

## Beschreibung

### Stand der Technik

Die Erfindung geht aus von einem Verfahren zum Einbringen eines Reagenzmittels in einen Abgasbereich einer Brennkraftmaschine und einer Vorrichtung zur Durchführung des Verfahrens nach der Gattung der unabhängigen Ansprüche.

In der DE 101 39 142 A1 ist eine Abgasbehandlungsvorrichtung einer Brennkraftmaschine beschrieben, bei der zur Verringerung der Stickoxid-Emissionen ein SCR-Katalysator (Selective-Catalytic-Reduction) eingesetzt ist, der die im Abgas enthaltenen Stickoxide mit dem Reduktionsmittel Ammoniak zu Stickstoff reduziert. Das Ammoniak wird in einem stromaufwärts des SCR-Katalysators angeordneten Hydrolyse-Katalysator aus einer Harnstoff-Wasser-Lösung gewonnen. Der Hydrolyse-Katalysator setzt den in der Harnstoff-Wasser-Lösung enthaltenen Harnstoff mit Wasser zu Ammoniak und Kohlendioxid um. Zur Sicherstellung einer exakten Dosierung ist vorgesehen, die Konzentration der Harnstoff-Wasser-Lösung zu ermitteln.

Die Harnstoff-Wasser-Lösung wird mit einer Pumpe auf einen vorgegebenen Druck gebracht. Ein Dosierventil legt einen vorgegebenen Durchfluss fest. In einer Mischkammer wird der Harnstoff-Wasser-Lösung Druckluft zugemischt. Die Harnstoff-Wasser-Lösung wird zusammen mit der zugemischten Luft mittels eines Sprührohrs in das Abgas der Brennkraftmaschine derart eingesprüht, dass eine möglichst gleichmäßige Anströmung des SCR-Katalysators erreicht wird.

In einer nicht vorveröffentlichten Patentanmeldung der Anmelderin sind ein gattungsgemäßes Verfahren und eine gattungsgemäße Vorrichtung beschrieben, bei denen ebenfalls ein unter Druck stehendes Reagenzmittel in das Abgas einer Brennkraftmaschine vor einen SCR-Katalysator eingesprüht wird. Der Reagenzmitteldruck wird in Abhängigkeit von einer Kenngröße auf einen vorgegebenen Reagenzmittel-Solldruck festgelegt. Als Kenngröße kann eine Betriebsgröße der Brennkraftmaschine und/oder eine Kenngröße des Abgases der Brennkraftmaschine herangezogen werden. Der vorgegebene Reagenzmitteldruck-Sollwert wird im Rahmen einer Regelung geregelt, bei welcher der Reagenzmittel-Istdruck von einem Reagenzmittel-Drucksensor erfasst wird. Dem Reagenzmittel kann Druckluft zugemischt werden. Der Druckluftdruck kann ebenfalls in Abhängigkeit von der Kenngröße im Rahmen einer Regelung auf einen vorgegebenen Druckluftdruck-Sollwert geregelt werden, wobei der Druckluft-Istdruck von einem Druckluft-Drucksensor erfasst wird. Ein Defekt wenigstens eines der Drucksensoren kann zu einer verminderten Leistungsfähigkeit des SCR-Katalysators führen mit der Folge, dass ungereinigtes Abgas in die Umgebung gelangen kann.

Der Erfindung liegt die Aufgabe zugrunde, ein Verfahren zum Einbringen eines Reagenzmittels in einen Abgasbereich einer Brennkraftmaschine und eine Vorrichtung zur Durchführung des Verfahrens vorzuschlagen, die einen fehlerhaften Zustand erkennen.

Die Aufgabe wird durch die in den unabhängigen Ansprüchen angegebenen Merkmale jeweils gelöst.

### Vorteile der Erfindung

Die erfindungsgemäße Vorgehensweise zum Einbringen eines Reagenzmittels in einen Abgasbereich einer Brennkraftmaschine, bei dem das unter Druck stehende Reagenzmittel zusammen mit Druckluft über ein Sprührohr in den Abgaskanal geleitet wird, sieht eine Diagnose vor, bei der festgestellt wird, ob das Sprührohr durchlässig ist. Die Diagnose wird zu einem Startzeitpunkt durch Vermindern des Reagenzmitteldrucks und des Druckluftdrucks gestartet.
Nach dem Startzeitpunkt wird der zeitliche Verlauf des Reagenzmitteldrucks daraufhin überprüft, ob ein Reagenzmittel-Druckabfall aufgetreten ist. Weiterhin wird nach dem Startzeitpunkt der zeitliche Verlauf des Druckluftdrucks daraufhin überprüft, ob ein Druckluft-Druckabfall aufgetreten ist. Ein Fehlersignal wird bereitgestellt, wenn sowohl der Reagenzmittel-Druckabfall als auch der Druckluft-Druckabfall jeweils wenigstens einen vorgegebenen Schwellenwert nicht durchschreiten.

Die erfindungsgemäße Vorgehensweise ermöglicht eine Diagnose der Vorgänge im Sprührohr, das ein eigenständiges Bauteil ist oder Bestandteil eines Bauteils sein kann. Da es sich um eine mechanische Komponente handelt, ist eine direkte Überwachung mit elektrischen Signalen nicht ohne weiteres möglich. im Sprührohr kann beispielsweise eine Kristallisation eines Reagenzmittels, beispielsweise des Harnstoffs einer Harnstoff-Wasser-Lösung auftreten. Das Sprührohr kann durch Partikel zumindest teilweise blockiert werden, die durch Verunreinigungen des Reagenzmittels oder durch einen Schmutzeintrag auftreten können.

Die erfindungsgemäße Vorgehensweise kann kostengünstig realisiert werden, da sowohl zur Erfassung des Reagenzmitteldrucks als auch des Druckluftdrucks ohnehin geeignete Maßnahmen zu treffen sind. Zur Erfassung der beiden Drücke können beispielsweise Drucksensoren vorgesehen sein.

Die Diagnose des Sprührohrs unterstützt das effiziente Arbeiten der Abgasbehandlungsvorrichtung, die bei geringst möglichem Reagenzmittelverbrauch ein optimales Reinigungsergebnis erzielen kann.

Vorteilhafte Weiterbildungen und Ausgestaltungen der erfindungsgemäßen Vorgehensweise ergeben sich aus abhängigen Ansprüchen.

Eine Ausgestaltung sieht vor, dass der Druckabfall in einem vorgegebenen Zeitintervall nach dem Startzeitpunkt bewertet wird. Zum Beginn des vorgegebenen Zeitintervalls können mit dieser Ausgestaltung geeignete Ausgangsbedingungen zur Durchführung der Diagnose hergestellt werden.

Eine alternative oder zusätzliche Ausgestaltung sieht die Vorgabe eines Schwellenwerts für den Reagenzmitteldruck und/oder den Druckluftdruck vor, die nach dem Beginn der Druckabsenkung unterschritten werden müssen. Eine alternative oder zusätzliche Ausgestaltung sieht die Vorgabe von Druckdifferenzen vor, die nach Beginn der Druckabsenkung überschritten werden müssen.

Gemäß einer Ausgestaltung ist eine Abschaltung einer Reagenzmittelpumpe zum Herbeiführen der Änderung des Reagenzmitteldrucks vorgesehen. Eine entsprechende Ausgestaltung sieht ein Schließen eines Druckluftventils zum Herbeiführen der Änderung des Druckluftdrucks vor.

Eine Weiterbildung der erfindungsgemäßen Vorgehensweise sieht vor, dass der Startzeitpunkt in einem Nachlauf eines Steuergeräts liegt, während dem die Brennkraftmaschine bereits abgeschaltet ist. Die Maßnahme ermöglicht die Durchführung der Diagnose ohne eine Beeinflussung der Abgasbehandlungsvorrichtung während des Betriebs der Brennkraftmaschine.

Die erfindungsgemäße Vorrichtung zur Durchführung des erfindungsgemäßen Verfahrens betrifft zunächst ein Steuergerät, das zur Durchführung des Verfahrens hergerichtet ist. Das Steuergerät enthält insbesondere eine Druckluft-Drucksignalbewertung und/oder eine Reagenzmittel-Drucksignalbewertung. Das Steuergerät enthält vorzugsweise wenigstens einen elektrischen Speicher, in dem die Diagnosefunktionen als Computerprogramm abgelegt sind.

Weitere vorteilhafte Weiterbildungen und Ausgestaltungen der erfindungsgemäßen Vorgehensweise ergeben sich aus weiteren abhängigen Ansprüchen und aus der folgenden Beschreibung.

### Zeichnung

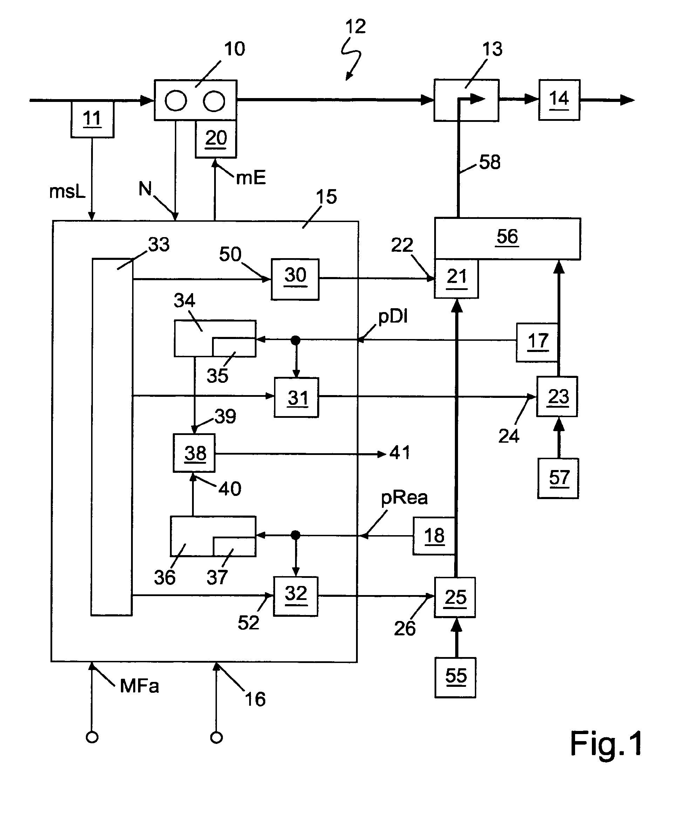

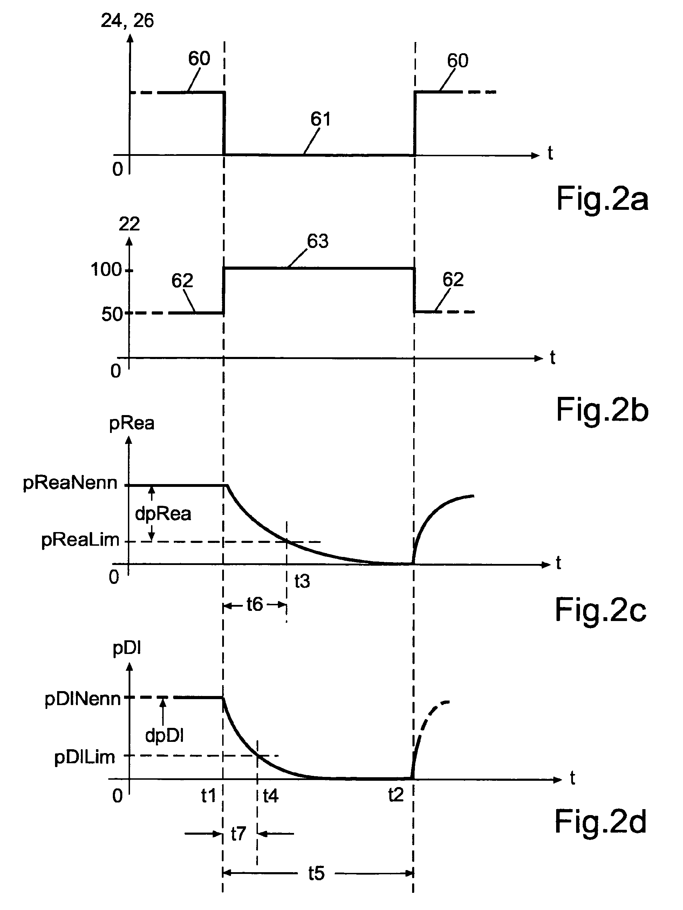

Figur 1 zeigt ein technisches Umfeld, in welchem ein erfindungsgemäßes Verfahren abläuft und die Figuren 2a - 2d zeigen Signalverläufe in Abhängigkeit von der Zeit.

Figur 1 zeigt eine Brennkraftmaschine 10, in deren Ansaugbereich ein Luftsensor 11 und in deren Abgasbereich 12 eine Reagenzmittel-Einbringvorrichtung 13 sowie eine Abgasbehandlungsvorrichtung 14 angeordnet sind. Der Luftsensor 11 gibt ein Luftsignal msL an ein Steuergerät 15 ab. Dem Steuergerät 15 werden weiterhin eine von der Brennkraftmaschine 10 bereitgestellte Drehzahl N, ein Drehmoment-Sollwert MFa, ein Brennkraftmaschinen-Betriebssignal 16, ein von einem Druckluft-Drucksensor 17 bereitgestelltes Druckluft-Drucksignal pDI und ein von einem Reagenzmittel-Drucksensor 18 bereitgestelltes Reagenzmittel-Drucksignal pRea zugeführt.

Das Steuergerät 15 gibt an eine der Brennkraftmaschine 10 zugeordnete Kraftstoffzumessvorrichtung 20 ein Kraftstoffsignal mE, an ein Dosierventil 21 ein Dosierventil-Ansteuersignal 22, an ein Druckluftregelventil 23 ein Druckluftregelventil-Ansteuersignal 24 sowie an eine Reagenzmittelpumpe 25 ein Reagenzmittelpumpen-Ansteuersignal 26 ab.

Das Steuergerät 15 enthält eine Dosierventil-Ansteuerung 30, eine Druckluftregelventil-Ansteuerung 31, eine Reagenzmittelpumpen-Ansteuerung 32, einen Zeitgeber 33, eine Druckluft-Drucksignalbewertung 34 mit einer Druckluft-Drucksignal-Schwellenvorgabe 35, eine Reagenzmittel-Drucksignalbewertung 36 mit einer Reagenzmittel-Drucksignal-Schwellenvorgabe 37 sowie eine Und-Verknüpfung 38.

Die Druckluft-Drucksignalbewertung 34 gibt an die Und-Verknüpfung 38 ein Druckluft-Fehlersignal 39 und die Reagenzmittel-Drucksignalbewertung 36 ein Reagenzmittel-Fehlersignal 40 ab. Die Und-Verknüpfung 38 stellt ein Fehlersignal 41 bereit.

Der Zeitgeber 33 gibt an die Dosierventil-Ansteuerung 30 ein erstes Steuersignal 50, an die Druckluftregelventil-Ansteuerung 31 ein zweites Steuersignal 51 und an die Reagenzmittelpumpen-Ansteuerung 32 ein drittes Steuersignal 52 ab.

Das in einem Reagenzmitteltank 55 gelagerte Reagenzmittel gelangt über die Reagenzmittelpumpe 25 und über das Dosierventil 21 in eine Mischkammer 56. Der Mischkammer 56 wird weiterhin die in einem Druckbehälter 57 bereitgestellte und durch das Druckluftregelventil 23 geleitete Druckluft zugeführt. Die Mischkammer 56 ist mit der Reagenzmittel-Einbringvorrichtung 12 über ein Sprührohr 58 verbunden.

Figur 2a zeigt das Druckluftregelventil-Ansteuersignal 24 sowie das Reagenzmittelpumpen-Ansteuersignal 26 in Abhängigkeit von der Zeit t. Beide Signale ändern sich zu einem Startzeitpunkt t1 von einem Betriebspegel 60 zu einem Abschaltpegel 61 und zu einem zweiten Zeitpunkt t2 vom Abschaltpegel 61 zum Betriebspegel 60.

Figur 2b zeigt das Dosierventil-Ansteuersignal 22 in Abhängigkeit von der Zeit t. Zum Startzeitpunkt t1 wechselt das Dosierventil-Ansteuersignal 22 von einem Betriebszustand 62 zu einem Öffnungszustand 63 und zum zweiten Zeitpunkt t2 vom Öffnungszustand 63 zurück zum Betriebszustand 62.

Figur 2c zeigt das Reagenzmittel-Drucksignal pRea in Abhängigkeit von der Zeit t. Das Reagenzmittel-Drucksignal pRea ändert sich zum Startzeitpunkt t1 von einem Reagenzmittel-Nenndruck pReaNenn auf einen Reagenzmitteldruck-Schwellenwert pReaLim, der zu einem dritten Zeitpunkt t3 erreicht wird. Zwischen dem Reagenzmittel-Nenndruck pReaNenn und den Reagenzmitteldruck-Schwellenwert pReaLim liegt eine Reagenzmittel-Druckdifferenz dpRea. Das Reagenzmittel-Drucksignal pRea fällt bis zum zweiten Zeitpunkt t2 ab und steigt danach wieder an.

Figur 2d zeigt das Druckluft-Drucksignal pDl in Abhängigkeit von der Zeit t. Das Druckluft-Drucksignal pDI ändert sich zum Startzeitpunkt t1 von einem Druckluftdruck-Nennwert pDINenn auf einen Druckluftdruck-Schwellenwert pDILim, der zu einem vierten Zeitpunkt t4 erreicht wird. Zwischen dem Druckluftdruck-Nennwert pDINenn und dem Druckluftdruck-Schwellenwert pDILim liegt eine Druckluft-Druckdifferenz dpDI. Das Druckluft-Drucksignal pDI fällt bis zum zweiten Zeitpunkt t2 ab und steigt danach wieder an.

Zwischen dem Startzeitpunkt t1 und dem zweiten Zeitpunkt t1, t2 liegt ein erstes Zeitintervall t5, zwischen dem Startzeitpunkt t1 und dem dritten Zeitpunkt t1, t3 ein zweites Zeitintervall t6 und zwischen dem Startzeitpunkt t1 und dem vierten Zeitpunkt t1, t4 ein drittes Zeitintervall t7.

### Erfindungsgemäß ist folgende Vorgehensweise vorgesehen:

Nach der Inbetriebnahme der Brennkraftmaschine 10 durch das Brennkraftmaschinen-Betriebssignal 16, das beispielsweise von einem nicht näher gezeigten Zündschloss eines Kraftfahrzeugs bereitgestellt wird, legt das Steuergerät 15 in Abhängigkeit von wenigstens einem Eingangssignal das Kraftstoffsignal mE fest. Als Eingangssignal ist beispielsweise das vom Luftsensor 11 bereitgestellte Luftsignal msL und/oder die von der Brennkraftmaschine 10 bereitgestellte Drehzahl N und/oder der von einer Position eines nicht näher gezeigten Fahrpedals abhängige Drehmoment-Sollwert MFa vorgesehen.

Das Kraftstoffsignal mE legt beispielsweise eine Einspritzdauer von nicht näher gezeigten Kraftstoffventilen fest, die in der Kraftstoffzumessvorrichtung 20 angeordnet sind.

Das Abgas der Brennkraftmaschine 10 wird in der Abgasbehandlungsvorrichtung 14 von wenigstens einer Abgaskomponente gereinigt. Bei der Abgasbehandlungsvorrichtung 14 handelt es sich beispielsweise um einen Katalysator und/oder einen Speicherkatalysator und/oder ein Partikelfilter. Im gezeigten Ausführungsbeispiel wird von einem Katalysator ausgegangen, der insbesondere als SCR-Katalysator (Selective-Catalytic-Reduction) ausgebildet ist. Der SCR-Katalysator 14 konvertiert die im Abgas enthaltenen Stickoxide beispielsweise mit Ammoniak zu Wasser und Stickstoff. Das Ammoniak kann unmittelbar in den Abgasbereich 12 stromaufwärts des SCR-Katalysators 14 eingebracht werden. Im gezeigten Ausführungsbeispiel wird davon ausgegangen, dass die Reagenzmittel-Einbringvorrichtung 13 vorgesehen ist, die beispielsweise eine Harnstoff-Wasser-Lösung als Reagenzmittel in den Abgasbereich 12 stromaufwärts des SCR-Katalysators 14 einbringt. Das Ammoniak wird aus der Harnstoff-Wasser-Lösung vor und insbesondere im SCR-Katalysator 14, der gegebenenfalls einen als Hydrolyse-Katalysator wirkenden Teil enthält, bereitgestellt.

Die als Reagenzmittel vorgesehene Harnstoff-Wasser-Lösung wird im Reagenzmitteltank 55 gelagert, von der Reagenzmittelpumpe 25 wenigstens näherungsweise auf einen vorgegebenen Reagenzmittel-Solldruck gebracht und über das Dosierventil 21 der Mischkammer 56 zugeführt. Im gezeigten Ausführungsbeispiel wird davon ausgegangen, dass in der Mischkammer 56 das Reagenzmittel mit Druckluft vermischt wird, die im Drucklufttank 57 bereitgestellt wird. Der Druckluftdruck wird mit dem Druckluftregelventil 23 wenigstens näherungsweise auf einen vorgegebenen Druckluft-Solldruck gebracht.

Sowohl der Reagenzmitteldruck als auch der Druckluftdruck werden von Drucksensoren 17, 18, erfasst. Der Reagenzmittel-Drucksensor 18 stellt das Reagenzmittel-Drucksignal pRea und der Druckluft-Drucksensor 17 das Druckluft-Drucksignal pDl bereit. Bei der Inbetriebnahme der Brennkraftmaschine 10 mit dem Brennkraftmaschinen-Betriebssignal 16 wird von der Reagenzmittelpumpen-Ansteuerung 32 das Reagenzmittelpumpen-Ansteuersignal 26 bereitgestellt. Die Reagenzmittelpumpe 25 bringt das Reagenzmittel auf einen vorgegebenen Druck von beispielsweise 4 bar. Die Reagenzmittelpumpen-Ansteuerung 32 kann eine Regelung enthalten, der als Druck-Istwert das Reagenzmittel-Drucksignal pRea zur Verfügung gestellt wird. Die Reagenzmittelmenge wird mit dem Dosierventil 21 vorgegeben, das die Dosierventil-Ansteuerung 30 mit dem Dosierventil-Ansteuersignal 22 beaufschlagt. Das Dosierventil-Ansteuersignal 22 gibt beispielsweise einen vorgegebenen Querschnitt des Dosierventils 21 frei.

Die Druckluft, die in der Mischkammer 56 dem Reagenzmittel zugemischt wird, wird ebenfalls vorzugsweise auf einen vorgegebenen Druckluft-Solldruck geregelt. Die Druckluftregelventil-Ansteuerung 31 legt hierzu das Druckluftregelventil-Ansteuersignal 24 in Abhängigkeit vom Druckluft-Drucksignal pDI fest. Der Druckluft-Solldruck beträgt beispielsweise 8 bar. Der Drucklufttank 57 ist in einem Kraftfahrzeug zum Betreiben einer Bremsanlage und/oder einer hilfskraftunterstützten Lenkung und/oder von sonstigen Verstellantrieben gegebenenfalls vorhanden. Eventuell ist ein Kompressor einzusetzen. Der Druckluftdruck kann vor der Mischkammer 56 beispielsweise mit einer nicht näher gezeigten überkritischen Drossel und/oder durch den Druckverlust eines nicht näher gezeigten Rückschlagventils auf beispielsweise ebenfalls 4 bar vermindert werden.

Durch eine teilweise oder vollständige Blockierung des Sprührohrs 58 kann die Abgasbehandlungsvorrichtung 14 ihre Aufgabe nur noch zum Teil oder nicht mehr erfüllen. Im Sprührohr 58 kann beispielsweise eine Kristallisation des Harnstoffs der Harnstoff-Wasser-Lösung auftreten. Das Sprührohr 58 kann durch Partikel teilweise oder vollständig blockiert werden, die durch Verunreinigungen des Reagenzmittels oder durch einen Schmutzeintrag auftreten können.

Im gezeigten Ausführungsbeispiel ist das Sprührohr 58 als diskretes Bauteil zwischen der Mischkammer 56 und der Reagenzmittel-Einbringvorrichtung 13 angeordnet. Das Sprührohr 58 ist ein Bauteil, in welchem ganz allgemein ein Reagenzmittel mit Druckluft vermischt auftritt. Das Sprührohr 58 könnte beispielsweise in der Reagenzmittel-Einbringvorrichtung 13 enthalten sein. Eine andere Ausgestaltung sieht vor, dass das Reagenzmittel unmittelbar vom Dosierventil 21 in den Abgasbereich 12 der Brennkraftmaschine 10 eingebracht wird. Das Sprührohr 58 ist bei dieser Ausgestaltung ein Teil des Dosierventils 21, in welchem gleichzeitig das Reagenzmittel und die zugemischte Druckluft geführt werden.

Vor dem Startzeitpunkt t1 der Diagnose weist das Druckventil-Ansteuersignal 24 und das Reagenzmittelpumpen-Ansteuersignal 26 gemäß Figur 2a jeweils einen Betriebspegel 60 auf. Der Betriebspegel 60 entspricht beispielsweise einem vorgegebenen Tastverhältnis eines impulsbreitenmodulierten Signals. Beide Ansteuersignale 24, 26 legen einen Nenndruck fest. Der Reagenzmitteldruck soll gemäß Figur 2c den vorgegebenen Reagenzmittel-Nenndruck pReaNenn und der Druckluftdruck gemäß Figur 2d den vorgegebenen Druckluftdruck-Nennwert pDINenn aufweisen.

Die Reagenzmittelmenge wird bei wenigstens näherungsweise Einhaltung des vorgegebenen Reagenzmittel-Nenndrucks pReaNenn durch den Öffnungsquerschnitt des Dosierventils 21 festgelegt, den das Dosierventil-Ansteuersignal 22 bestimmt. Gemäß Figur 2b weist das Dosierventil-Ansteuersignal 22 vor dem Startzeitpunkt t1 den Betriebszustand 62 auf, der einem Öffnungsquerschnitt von beispielsweise 50 % entspricht.

Zum Startzeitpunkt t1 werden das Druckventil-Ansteuersignal 24 und das Reagenzmittelpumpen-Ansteuersignal 26 auf den Abschaltpegel 61 zurückgenommen. Hierbei kommt es nicht darauf an, dass beide Vorgänge gleichzeitig stattfinden. Im gezeigten Ausführungsbeispiel wird die Reagenzmittelpumpe 25 vollständig abgeschaltet und das Druckluftregelventil 23 vollständig geschlossen. Wesentlich ist, dass die beiden Drucksollwerte nach dem Startzeitpunkt t1 einen kleineren Wert als vor dem Startzeitpunkt t1 aufweisen. Zum Startzeitpunkt t1 wird weiterhin das Dosierventil-Ansteuersignal 22 vom Betriebszustand 62 auf den Öffnungszustand 63 geändert, der im gezeigten Ausführungsbeispiel bei 100 % liegt. Wesentlich ist hier, dass das Dosierventil 21 einen von null verschiedenen Öffnungszustand aufweist, damit der Reagenzmittel-Drucksensor 18 einen Druckabfall detektieren kann. Bei dem im gezeigten Ausführungsbeispiel zugrunde gelegten Öffnungszustand 63 von beispielsweise 100 % kann der größtmögliche Druckabfall ohne Begrenzung durch das Dosierventil 21 auftreten. Auch hier kommt es nicht darauf an, dass das Dosierventil-Ansteuersignal 22 genau zum Startzeitpunkt t1 verändert wird.

Vorgesehen ist eine Überprüfung des Druckabfalls des Reagenzmitteldrucks und des Druckabfalls der Druckluft innerhalb des ersten Zeitintervalls t5. Sofern die beiden Druckabfälle nicht gleichzeitig durch die beschriebenen Maßnahmen eingeleitet werden, muss der zeitliche Versatz zwischen den beiden Maßnahmen bei der Signalbewertung berücksichtigt werden.

Eine Überprüfung sieht den Vergleich der Drucksignale pRea, pDl mit den Schwellenwerten pReaLim, pDILim innerhalb des ersten Zeitintervalls t5 vor. Eine Weiterbildung dieser Ausgestaltung sieht vor, dass das Reagenzmittel-Drucksignal pRea zum vorgegebenen dritten Zeitpunkt t3 den vorgegebenen Reagenzmitteldruck-Schwellenwert pReaLim und dass das Druckluft-Drucksignal pDI zum vorgegebenen vierten Zeitpunkt t4 den vorgegebenen Druckluftdruck-Schwellenwert pDILim jeweils spätestens unterschreiten müssen.

Eine alternative oder zusätzliche Überprüfung sieht den Vergleich der Drucksignale pRea, pDI mit den Druckdifferenzen dpRea, dpDI innerhalb des ersten Zeitintervalls t5 vor. Eine Weiterbildung dieser Ausgestaltung sieht vor, dass das Reagenzmittel-Drucksignal pRea zum vorgegebenen dritten Zeitpunkt t3 die vorgegebene Reagenzmittel-Druckdifferenz dpRea und dass das Druckluft-Drucksignal pDI zum vorgegebenen vierten Zeitpunkt t4 die vorgegebene Druckluft-Druckdifferenz dpDI jeweils spätestens überschreiten müssen.

In den gezeigten Ausführungsbeispielen gemäß Figuren 2c und 2d sind jeweils die Grenzfälle eingezeichnet. Das Reagenzmittel-Drucksignal pRea muss innerhalb des zweiten Zeitintervalls t6 oder spätestens zum dritten Zeitpunkt t3 den vorgegebenen Schwellenwert durchschreiten. Das Druckluft-Drucksignal pDl muss innerhalb des dritten Zeitintervalls t7 oder spätestens zum vierten Zeitpunkt t4 den vorgegebenen Schwellenwert durchschreiten. Bei der Festlegung des zweiten und dritten Zeitintervalls t6, t7 sollte berücksichtigt werden, dass der Druckabfall des Reagenzmitteldrucks erheblich langsamer stattfindet als der Druckabfall des Druckluftdrucks.

Die Druckluft-Drucksignal-Schwellenvorgabe 35 enthält den Druckluftdruck-Schwellenwert pDILim und/oder die Druckluft-Druckdifferenz dpDI und/oder den für den wenigstens einen Differenzialquotienten und/oder wenigstens einen Differenzenquotienten vorzusehenden Schwellenwert.

Die Reagenzmittel-Drucksignal-Schwellenvorgabe 37 enthält den Reagenzmitteldruck-Schwellenwert pReaLim und/oder die Reagenzmittel-Druckdifferenz dpRea und/oder den für den wenigstens einen Differenzialquotienten und/oder wenigstens einen Differenzenquotienten vorzusehenden Schwellenwert.

Falls das Druckluft-Drucksignal pDI wenigstens einen vorgegebenen Schwellenwert nicht durchschreitet, stellt die Druckluft-Drucksignalbewertung 34 das Druckluft-Fehlersignal 39 bereit. Falls das Reagenzmittel-Drucksignal pRea wenigstens einen vorgegebenen Schwellenwert nicht durchschreitet, stellt die Reagenzmittel-Drucksignalbewertung 36 das Reagenzmittel-Fehlersignal 40 bereit. Die Und-Verknüpfung 38 stellt sicher, dass das Fehlersignal 41 nur dann bereitgestellt wird, wenn sowohl das Druckluft-Fehlersignal 39 als auch das Reagenzmittel-Fehlersignal 40 vorliegen. Nur in diesem Fall kann davon ausgegangen werden, dass das Sprührohr 58 nur noch teilweise oder überhaupt nicht mehr durchlässig ist.

Das Fehlersignal 41 kann einem Fahrer eines nicht näher gezeigten Kraftfahrzeugs angezeigt werden. Alternativ oder zusätzlich kann das Fehlersignal 41 in einen nicht gezeigten Fehlerspeicher hinterlegt werden.

Die Diagnose ist spätestens am Ende des ersten Zeitintervalls t5 beendet. Gemäß dem gezeigten Ausführungsbeispiel wird nach dem ersten Zeitintervall t5 wieder der normale Betrieb aufgenommen. Zum zweiten Zeitpunkt t2 wechseln sowohl das Druckventil-Ansteuersignal 24 als auch das Reagenzmittelpumpen-Ansteuersignal 26 vom Abschaltpegel 61 zum Betriebspegel 60. Das Dosierventil-Ansteuersignal 22 wechselt vom Öffnungszustand 63 zum Betriebszustand 62. Das Reagenzmittel-Drucksignal pRea und das Druckluft-Drucksignal pDl steigen nach dem zweiten Zeitpunkt t2 wieder auf den Reagenzmittel-Nenndruck pReaNenn und den Druckluftdruck-Nennwert pDINenn an.

Gemäß einer vorteilhaften Weiterbildung ist die Diagnose im Nachlauf der Brennkraftmaschine 10 vorgesehen. Bei dieser Ausgestaltung wird ein Abschalten der Brennkraftmaschine 10 anhand des Brennkraftmaschinen-Betriebssignals 16 erkannt. Die Stromversorgung des Steuergeräts 15 wird zum Startzeitpunkt t1 der Diagnose noch nicht unterbrochen. Zum Startzeitpunkt t1 wird die Brennkraftmaschine 10 abgeschaltet und die Diagnose gestartet. Nach Beendigung der Diagnose spätestens zum zweiten Zeitpunkt t2 kann die Stromversorgung des Steuergeräts 15 abgeschaltet werden. Der Vorteil dieser Ausgestaltung liegt darin, dass die Diagnose keinen Einfluss auf die Konvertierungsrate der Abgasbehandlungsvorrichtung 14 während des Betriebs der Brennkraftmaschine 10 hat.

## Patentansprüche

1. Verfahren zum Einbringen eines Reagenzmittels in einen Abgasbereich (12) einer Brennkraftmaschine (10), bei dem das unter Druck stehende Reagenzmittel zusammen mit Druckluft über ein Sprührohr (58) in den Abgasbereich (12) geleitet wird, **dadurch gekennzeichnet, dass** eine Diagnose vorgesehen ist, bei der festgestellt wird, ob das Sprührohr (58) wenigstens teilweise blockiert ist, dass die Diagnose zu einem Startzeitpunkt (t1) **dadurch** gestartet wird, dass sowohl der Reagenzmitteldruck als auch der Druckluftdruck vermindert werden, dass sowohl der nach dem Startzeitpunkt (t1) erfasste zeitliche Verlauf des Reagenzmitteldrucks (pRea) daraufhin überprüft wird, ob ein Reagenzmittel-Druckabfall aufgetreten ist, als auch der nach dem Startzeitpunkt (t1) erfasste zeitliche Verlauf des Druckluftdrucks (pDI) daraufhin überprüft wird, ob ein Druckluft-Druckabfall aufgetreten ist und dass ein Fehlersignal (41) bereitgestellt wird, wenn sowohl der Reagenzmittel-Druckabfall als auch der Druckluft-Druckabfall jeweils wenigstens einen vorgegebenen Schwellenwert (pReaLim, pDILim, dpRea, dpDI) nicht durchschreiten.

2. Verfahren nach Anspruch 1, **dadurch gekennzeichnet, dass** die Druckabfälle in einem vorgegebenen Zeitintervall (t5) nach dem Startzeitpunkt (t1) bewertet werden.

3. Verfahren nach Anspruch 1, **dadurch gekennzeichnet, dass** spätestens zu einem vorgegebenen Zeitpunkt (t3, t4) ein vorgegebener Reagenzmitteldruck-Schwellenwert (pReaLim) und ein vorgegebener Druckluftdruck-Schwellenwert (pDILim) unterschritten sein müssen.

4. Verfahren nach Anspruch 1, **dadurch gekennzeichnet, dass** spätestens zu einem vorgegebenen Zeitpunkt (t3, t4) eine vorgegebene Reagenzmittel-Druckdifferenz (dpRea) und eine vorgegebene Druckluft-Druckdifferenz (dpDI) überschritten sein müssen.

5. Verfahren nach Anspruch 1, **dadurch gekennzeichnet, dass** zum Herbeiführen der Änderung des Reagenzmitteldrucks die Leistung einer Reagenzmittelpumpe (25) vermindert oder die Reagenzmittelpumpe (25) abgeschaltet wird.

6. Verfahren nach Anspruch 1, **dadurch gekennzeichnet, dass** zum Herbeiführen der Änderung des Druckluftdrucks ein Druckluftventil (23) in Richtung Schließen verstellt oder vollständig geschlossen wird.

7. Verfahren nach Anspruch 1, **dadurch gekennzeichnet, dass** der Startzeitpunkt (t1) in einem Nachlauf eines Steuergeräts (15) liegt, während dem die Brennkraftmaschine (10) bereits abgeschaltet ist.

8. Vorrichtung zur Durchführung des Verfahrens nach einem der vorhergehenden Ansprüche, **dadurch gekennzeichnet, dass** ein Steuergerät (15) vorgesehen ist, das eine Druckluftregelventil-Ansteuerung (31), eine Dosierventil-Ansteuerung (30), eine Reagenzmittelpumpen-Ansteuerung (32), einen Zeitgeber (33), eine Druckluft-Drucksignalbewertung (34), eine Druckluft-Drucksignal-Schwellenvorgabe (35), eine Reagenzmittel-Drucksignalbewertung (36), eine Reagenzmittel-Drucksignal-Schwellenvorgabe (37) sowie eine UND-Verknüpfung (38) enthält.

## Claims

1. Method for introducing a reagent into an exhaust-gas region (12) of an internal combustion engine (10), in which method the pressurized reagent is conducted together with compressed air into the exhaust-gas region (12) via a spray pipe (58), **characterized in that** a diagnosis is provided in which it is established whether the spray pipe (58) is at least partially blocked, **in that** the diagnosis is started at a start time (t1) by virtue of both the reagent pressure and also the compressed air pressure being reduced, **in that** both the time profile of the reagent pressure (pRea) measured after the start time (t1) is checked for whether a reagent pressure drop has occurred and also the time profile of the compressed air pressure (pDl) measured after the start time (t1) is checked for whether a compressed air pressure drop has occurred, and **in that** a fault signal (41) is output if both the reagent pressure drop and also the compressed air pressure drop each do not cross at least one predefined threshold value (pReaLim, pDlLim, dpRea, dpDl).

2. Method according to Claim 1, **characterized in that** the pressure drops are evaluated in a predefined time interval (t5) after the start time (t1).

3. Method according to Claim 1, **characterized in that** a predefined reagent pressure threshold value (pReaLim) and a predefined compressed air pressure threshold value (pDlLim) must have been undershot at the latest at a predefined time (t3, t4).

4. Method according to Claim 1, **characterized in that** a predefined reagent pressure difference (dpRea) and a predefined compressed air pressure difference (dpDl) must have been exceeded at the latest at a predefined time (t3, t4).

5. Method according to Claim 1, **characterized in that**, to effect the change in reagent pressure, the power of a reagent pump (25) is reduced or the reagent pump (25) is deactivated.

6. Method according to Claim 1, **characterized in that**, to effect the change in compressed air pressure, a compressed air valve (23) is adjusted in a closing direction or is completely closed.

7. Method according to Claim 1, **characterized in that** the start time (t1) lies in a run-on phase of a control unit (15) during which the internal combustion engine (10) has already been shut down.

8. Device for carrying out the method according to one of the preceding claims, **characterized in that** a control unit (15) is provided which comprises a compressed air regulating valve control means (31), a dosing valve control means (30), a reagent pump control means (32), a timer (33), a compressed air pressure signal evaluation means (34), a compressed air pressure signal threshold presetting means (35), a reagent pressure signal evaluation means (36), a reagent pressure signal threshold presetting means (37), and an AND logic operation means (38).

## Revendications

1. Procédé pour introduire un réactif dans une région de gaz d'échappement (12) d'un moteur à combustion interne (10), dans lequel le réactif sous pression est guidé conjointement avec de l'air sous pression par le biais d'un tube de pulvérisation (58) dans la région de gaz d'échappement (12), **caractérisé en ce qu'**il est prévu un diagnostic qui permet d'établir si le tube de pulvérisation (58) est au moins partiellement bloqué, **en ce que** le diagnostic est lancé à un instant de démarrage (t1) par le fait que la pression de réactif ainsi que la pression d'air sous pression sont réduites, **en ce que**, à la fois, l'allure dans le temps de la pression de réactif (pRea) détectée après l'instant de démarrage (t1) est contrôlée pour établir s'il s'est produit une chute de pression de réactif, et l'allure dans le temps de la pression d'air sous pression (pDI) détectée après l'instant de démarrage (t1) est contrôlée pour établir s'il s'est produit une chute de pression d'air sous pression, et **en ce qu'**un signal d'erreur (41) est fourni lorsqu'à la fois la chute de pression de réactif et la chute de pression d'air sous pression ne dépassent pas chacune au moins une valeur seuil prédéfinie (pReaLim, pDILim, dpRea, dpDI).

2. Procédé selon la revendication 1, **caractérisé en ce que** les chutes de pression sont analysées dans un intervalle de temps prédéfini (t5) après l'instant de démarrage (t1).

3. Procédé selon la revendication 1, **caractérisé en ce qu'**au plus tard à un instant prédéfini (t3, t4), une valeur seuil de pression de réactif prédéfinie (pReaLim) et une valeur seuil de pression d'air sous pression prédéfinie (pDILim) doivent être dépassées par le dessous.

4. Procédé selon la revendication 1, **caractérisé en ce qu'**au plus tard à un instant prédéfini (t3, t4), une différence de pression de réactif prédéfinie (dpRea) et une différence de pression d'air sous pression prédéfinie (dpDI) doivent être dépassées par le dessous.

5. Procédé selon la revendication 1, **caractérisé en ce que** pour provoquer la variation de pression de réactif, la puissance d'une pompe à réactif (25) est réduite ou la pompe à réactif (25) est coupée.

6. Procédé selon la revendication 1, **caractérisé en ce que** pour provoquer la variation de pression de l'air sous pression, une soupape d'air sous pression (23) est réglée dans le sens de la fermeture ou est complètement fermée.

7. Procédé selon la revendication 1, **caractérisé en ce que** l'instant de démarrage (t1) se situe dans un mode de fonctionnement par inertie d'un appareil de commande (15), pendant lequel le moteur à combustion interne (10) est déjà coupé.

8. Dispositif pour mettre en oeuvre le procédé selon l'une quelconque des revendications précédentes, **caractérisé en ce qu'**un appareil de commande (15) est prévu, lequel comprend une commande de soupape de régulation de l'air sous pression (31), une commande de soupape de dosage (30), une commande de pompe de réactif (32), un temporisateur (33), un dispositif d'analyse de signal de pression d'air sous pression (34), une unité de pré-établissement de seuil de signal de pression d'air sous pression (35), un dispositif d'analyse de signal de pression de réactif (36), une unité de pré-établissement de seuil de signal de pression de réactif (37) ainsi qu'une porte ET (38).
